Europäisches Patentamt

European Patent Office

Office européen des brevets

(19)

(11) **EP 1 069 143 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(51) Int Cl.[7]: **C08G 18/08**, C08G 18/40, C08G 18/42, C08G 18/44, C08G 18/66, C08G 18/73, C08L 75/04

(21) Anmeldenummer: **00114007.8**

(22) Anmeldetag: **04.07.2000**

(54) **Weiche, elastische Polyurethanfolien, Verfahren zu ihrer Herstellung und ihre Verwendung**

Soft elastic polyurethane films, process of their preparation and their use

Films polyuréthane souples élastiques, leur procédé de préparation et leur utilisation

(84) Benannte Vertragsstaaten:
**AT BE CH CY DE DK ES FI FR GB GR IE IT LI LU MC NL PT SE**

(30) Priorität: **15.07.1999 DE 19933261**
**06.09.1999 DE 19942393**

(43) Veröffentlichungstag der Anmeldung:
**17.01.2001 Patentblatt 2001/03**

(73) Patentinhaber: **Bayer Aktiengesellschaft**
**51368 Leverkusen (DE)**

(72) Erfinder:
• **Kaufhold, Wolfgang, Dr.**
**51061 Köln (DE)**
• **Hoppe, Hans-Georg**
**42799 Leichlingen (DE)**
• **Bräuer, Wolfgang, Dr.**
**51375 Leverkusen (DE)**
• **Winkler, Jürgen**
**40764 Langenfeld (DE)**
• **Wussow, Hans-Georg, Dr.**
**40597 Düsseldorf (DE)**

(56) Entgegenhaltungen:
**EP-A- 0 399 272       DE-A- 19 757 569**
**DE-C- 4 203 307**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft weiche, elastische Polyurethanfolien (PU-Folien), die durch Sintern von pulverförmigen thermoplastischen Polyurethanen - im folgenden auch abgekürzt TPU genannt - mit Hilfe eines temperierten Formwerkzeugs hergestellt werden, ein Verfahren zu ihrer Herstellung und ihre Verwendung.

Die Herstellung von PU-Folien (Polyurethanfolien) durch Gießen aus flüssigen PU-Formulierungen oder durch Extrusion von TPU ist bekannt und wird z.B. im Kunststoff-Handbuch "Polyurethane", Band 7, 2. Auflage, Seite 469 (herausgegeben von Dr. G. Oertel; Carl Hanser Verlag, München, Wien, 1983) beschrieben.

Aus Flüssigformulierungen werden entweder Blöcke gegossen, aus denen Folien gespalten werden, oder die Folien werden im Schleuderverfahren direkt hergestellt. Folien aus TPU in Dicken von 0,03 bis 0,3 mm werden üblicherweise im Blasverfahren, dickere Folien, z.B. bis zu ungefähr 3 mm durch Breitschlitzextrusion hergestellt. In der genannten Monographie wird die Herstellung von PU-Folien aus TPU durch Sintern nicht erwähnt.

Bekannt ist ferner die Verwendung von dekorativen Kunststoff-Folien im Kraftfahrzeug-Innenraum [R. Pfriender, Kunststoffe, 76 (1986), 10, S. 960 ff.], wobei die Kunststoff-Formteile mit Folien beschichtet oder die Folien oder Häute mit Schaumstoffen, vorzugsweise PU-Schaumstoff hinterschäumt werden.

Bei Verwendung von PU werden die Oberflächenschichten meist aus Zweikomponenten-PU-Systemen im IMC-Verfahren (In Mould Coating) hergestellt. Nach diesem Verfahren wird das auf etwa 50°C erwärmte Formwerkzeug zuerst mit einem Trennmittel eingesprüht, danach wird der PU-Zweikomponentenlack und anschließend die PU-Trägerschicht in das offene Formwerkzeug eingebracht. Diese Fertigungstechnik zur Herstellung entsprechender Bauteile ist schwierig und wird bisher kaum von Verarbeitern angewendet (Dr. M. Wachsmann, Kunststoffberater, 10/1987, Seiten 27 bis 28).

In DE-A 4 203 307 wird die Verwendung aliphatischer TPU-Pulver zur Herstellung von Sinterfolien gelehrt. In DE-A 4 203 307 wird auf keinen spezifischen Schmelzindexbereich (MVR-Bereich) hingewiesen, der ein günstiges Verarbeitungsverhalten zur Folge hätte. Im Gegenteil, durch den erwähnten Kennzahlbereich von 97 bis 99 wird ein sehr breiter MVR-Bereich abgedeckt.

Nach dem Stand der Technik werden PVC/ABS-Folien üblicherweise nach dem Thermoform-Verfahren verformt und anschließend in einem zweiten Verfahrensschritt hinterschäumt. PVC-Folien können nach dem PVC-Powder-Slush-Verfahren hergestellt werden. Hierzu wird das Formwerkzeug in einem Ofen auf ungefähr 250°C erhitzt, danach das pulverförmige PVC gleichmäßig darauf verteilt und zum Ausgelieren der PVC-Haut das Formwerkzeug erneut im Ofen erwärmt. Nach dem Abkühlen des Formwerkzeugs, z.B. in einem Wasserbad, kann die Folie entnommen und zur Hinterschäumung eingesetzt werden. Die nach dem PVC-Powder-Slush-Verfahren hergestellten Folien sind im Vergleich zu ABS/PVC-, PU-IMC- und TPU-Folien erheblich kostengünstiger. Nachteilig an Formkörpern aus mit PU-Schaumstoffen Hinterschäumten PVC-Folien ist die gegenseitige negative Beeinflussung der PVC-Folie und PU-Hinterschäumung. So diffundieren Bestandteile, wie z.B. Katalysatoren, Stabilisatoren u.a. aus dem PU-Schaumstoff in die Dekorfolie, und umgekehrt erfolgt eine Weichmachermigration von der PVC-Folie in den PU-Schaumstoff. Durch diese Migrationsprozesse werden die Formkörper, z.B. durch Schwindungen oder Versprödungen mechanisch geschädigt und verändern durch Verfärbung und Fleckenbildung ihr Aussehen (Kunststofftechnik, VDI-Verlag GmbH, Düsseldorf, 1987, "Kunststoffe als Problemlöser im Automobilbau", Seiten 141 ff).

In EP-A 399272 werden elastische Polyurethanfolien beschrieben, die aus pulverförmigen TPU durch Sintern hergestellt werden. Die TPU sind durch einen Schmelzindex (MVR) [bei 190°C und einem Auflagegewicht von 212N] von 50 bis 350 beschrieben. In EP-A 399 372 wird ausdrücklich darauf hingewiesen, dass ein für den Sinterprozess geeignetes TPU die erwähnten Kriterien hinsichtlich Schmelzindex erfüllen muss. Nachteilig sind die notwendigen hohen Verarbeitungstemperaturen von 220 bis 280°C, vorzugsweise von 230 bis 270°C. TPU neigen allgemein und besonders TPU auf Polyetherbasis, bei diesen hohen Verarbeitungstemperaturen zum einen zum Molekulargewichtsabbau durch Kettenspaltung (Verschlechterung der mechanischen Eigenschaften) und zum anderen vor allem bei TPU auf Polyether- und/oder aromatischer Diisocyanatbasis zur Gelbfärbung (Verfärbung auch eingefärbter Probekörper; siehe auch Dissertation von Wolfgang Endres aus dem Fachbereich Chemie der Universität Osnabrück aus dem Jahre 1994). Ein TPU mit einem MVR von 50 bei 190°C und 212N, hat bei 21,2N und 190°C einen MVR von 2. Ein TPU mit einem MVR von 40 bei 190°C und 21,2N hat bei 212N und 190°C einen MVR von >500, das heißt das TPU "läuft durch" und ist nicht mehr messbar. Weiterhin nachteilig sind die in EP-A 399 272 beschriebenen hohen Verarbeitungstemperaturen von 220° bis 280°C wegen der damit verbundenen langen Zykluszeiten aufgrund der langen Abkühl- und Aufheizzeiten.

Aufgabe der vorliegenden Erfindung war es daher, ein Material zur Verfügung zu stellen, das auch bei niedrigen Verarbeitungstemperaturen von 180° bis 215°C, bevorzugt 190° bis 215°C im Sinterprozess zu Folien verarbeitet werden kann.

Diese Aufgabe konnte überraschenderweise mit TPU-Folien, hergestellt durch Sintern aus bestimmten TPU gelöst werden.

Gegenstand der Erfindung sind weiche, elastische Polyurethan-Folien erhältlich durch Sintern von pulverförmigen thermoplastischen Polyurethanen - im folgenden auch abgekürzt TPU genannt - mit einem Schmelzindex bei 190°C und bei einem Auflagegewicht von 21, 2N (2,16 kp) von 20 bis 100, bevorzugt 30 bis 60, mit einer relativen Lösungsviskosität von 1,15 bis 1,45, vorzugsweise von 1,25 bis 1,35, sowie einer Shore-A-Härte von 80 bis 98, bevorzugt 85 bis 94 mit Hilfe eines temperierten Formwerkzeugs, wobei das pulverförmige TPU erhältlich ist durch Reaktion von

a) aromatischen und/oder aliphatischen Diisocyanaten,
b) einem linearen, hydroxylterminierten Polyol mit einem mittleren Molekulargewicht zwischen 600 und 5 000 g/Mol und mit im Mittel 1,8 bis 3,0 Zerewitinoff-aktiven Wasserstoffatomen pro Molekül (Polyether-, Polyester-, Polycarbonatdiol oder Gemische davon),
c) einem Kettenverlängerer mit einem mittleren Molekulargewicht zwischen 60 und 500 g/Mol und mit im Mittel 1,8 bis 3,0 Zerewitinoff-aktiven Wasserstoffatomen pro Molekül (Diol oder Diol/Diamin-Gemisch), und
d) gegebenenfalls üblichen Hilfs- und Zusatzstoffen,

wobei das Äquivalenzverhältnis von NCO-Gruppen zur Summe der NCO-reaktiven Gruppen 0,9:1,0 bis 1,1:1,0 beträgt.

Unter Sintern von TPU wird im Zusammenhang mit der Herstellung der erfindungsgemäßen TPU-Folien unter anderem folgendes verstanden: Herstellung nach dem "Powder-Slush-Verfahren", wie beispielsweise in der DE-A 39 32 923 beschrieben, Herstellung nach dem Kalanderprozess wie beispielsweise im Kunststoff Handbuch "Polyurethane", Band 7 beschrieben, oder Herstellung nach dem Coextrusionsprozess, wie beispielsweise in Ullmann's Encyclopedia of Industrial Chemistry, Sixth Edition beschrieben.

Bevorzugt ist das pulverförmige TPU erhältlich durch Reaktion von

a) aromatischen Diisocyanaten, vorzugsweise 4,4'-Diphenylmethandiisocyanat,
b) einem linearen, hydroxylterminierten Polyol mit einem mittleren Molekulargewicht zwischen 600 und 5000 g/mol und mit im Mittel 1,8 bis 3,0 Zerewitinoff-aktiven Wasserstoffatomen pro Molekül,
c) einem Kettenverlängerer mit einem mittleren Molekulargewicht zwischen 60 und 500 g/mol und mit im Mittel 1,8 bis 3,0 Zerewitinoff-aktiven Wasserstoffatomen pro Molekül,
d) gegebenenfalls üblichen Hilfs- und Zusatzstoffen,

wobei das Äquivalenzverhältnis von NCO-Gruppen zur Summe der NCO-reaktiven Gruppen 0,9:1,0 bis 1,1:1,0 beträgt.

Für Anwendungen mit besonders hohen Anforderungen an die Lichtstabilität sind TPU auf Basis aromatischer Diisocyanate nicht mehr besonders geeignet. In EP-A 399 272 wird ausgeführt, dass TPU auf Basis aliphatischer Diisocyanate zwar lichtstabil sind, aber nach der thermoplastischen Verarbeitung nur schwer handhabbar sind. Deshalb werden Mischungen mit TPU auf Basis aromatischer Diisocyanate vorgeschlagen. Diese Mischungen erfüllen jedoch ebenfalls in vielen Fällen nicht mehr die hohen Anforderungen an die Lichtstabilität. Diese hohen Anforderungen werden überraschenderweise nur erfüllt, wenn die TPU überwiegend (größer 90 Gew.-%) auf Basis aliphatischer Diisocyanate aufgebaut sind. Es wurde nun gefunden, dass eine gute Handhabung dieser aliphatischen TPU auch nach thermoplastischer Verarbeitung erhalten wird, wenn das oben erwähnte pulverförmige TPU durch Reaktion von

a) Hexamethylendiisocyanat,
b) einem linearen, hydroxylterminierten Polyol mit einem mittleren Molekulargewicht zwischen 600 und 5000 g/mol und mit im Mittel 1,8 bis 3,0 Zerewitinoff-aktiven Wasserstoffatomen pro Molekül,
c) einem Kettenverlängerer mit einem mittleren Molekulargewicht zwischen 60 und 500 g/mol und mit im Mittel 1,8 bis 3,0 Zerewitinoff-aktiven Wasserstoffatomen pro Molekül,
d) gegebenenfalls üblichen Hilfs- und Zusatzstoffen

erhältlich ist, wobei das Äquivalenzverhältnis von NCO-Gruppen zur Summe der NCO-reaktiven Gruppen 0,9:1,0 bis 1,1:1,0 beträgt.

Je nach Anforderung an das Formteil, welches aus dem erfindungsgemäßen TPU erhältlich ist, kann das Hexamethylendiisocyanat (HDI) partiell gegen ein oder mehrere andere aliphatische Diisocyanate, insbesondere Isophorondiisocyanat (IPDI), 1,4-Cyclohexandiisocyanat, 1-Methyl-2,4-cyclohexandiisocyanat, 1-Methyl-2,6-cyclohexandiisocyanat und Isomerengemische davon, 4,4'-, 2,4'- und 2,2'-Dicyclohexylmethandiisocyanat und Isomerengemische davon ersetzt werden.

Lichtstabile, weiche, elastische Polyurethanfolien sind bevorzugt erhältlich, wenn das oben erwähnte pulverförmige TPU durch Reaktion von

a) 95 bis 70 Mol-% Hexamethylendiisocyanat und 5 bis 30 Mol-% andere aliphatische Diisocyanate,
b) einem linearen, hydroxylterminierten Polyol mit einem mittleren Molekulargewicht zwischen 600 und 5000 g/mol und mit im Mittel 1,8 bis 3,0 Zerewitinoff-aktiven Wasserstoffatomen pro Molekül,

c) einem Kettenverlängerer mit einem mittleren Molekulargewicht zwischen 60 und 500 g/mol und mit im Mittel 1,8 bis 3,0 Zerewitinoff-aktiven Wasserstoffatomen pro Molekül,

d) gegebenenfalls üblichen Hilfs- und Zusatzstoffen

erhältlich ist, wobei das Äquivalenzverhältnis von NCO-Gruppen zur Summe der NCO-reaktiven Gruppen 0,9:1,0 bis 1,1:1,0 beträgt.

Lichtstabile, weiche, elastische Polyurethanfolien sind besonders bevorzugt erhältlich, wenn das oben erwähnte pulverförmige TPU durch Reaktion von

a) 100 bis 60 Mol-%, bevorzugt 100 bis 70 Mol-%, besonders bevorzugt 100 bis 80 Mol-% Hexamethylendiisocyanat (HDI) und 0 bis 40 Mol-%, bevorzugt 0 bis 30 Mol-%, besonders bevorzugt 0 bis 20 Mol-% andere aliphatische Diisocyanate,

b) einem linearen, hydroxylterminierten Polyol mit einem mittleren Molekulargewicht zwischen 600 und 5000 g/mol und mit im Mittel 1,8 bis 3,0 Zerewitinoff-aktiven Wasserstoffatomen pro Molekül,

c) 80 bis 100 Gew.-% 1,6-Hexandiol und 0 bis 20 Gew.-% Kettenverlängerer mit einem mittleren Molekulargewicht von 60 bis 500 g/Mol und mit im Mittel 1,8 bis 3,0 Zerewitinoff-aktiven Wasserstoffatomen pro Molekül,

d) gegebenenfalls üblichen Hilfs- und Zusatzstoffen

erhältlich ist, wobei das Äquivalenzverhältnis von NCO-Gruppen zur Summe der NCO-reaktiven Gruppen 0,9:1,0 bis 1,1:1,0 beträgt.

Das pulverförmige TPU ist auch erhältlich durch Reaktion von

a) aromatischen Diisocyanaten, vorzugsweise 4,4'-Diphenylmethandiisocyanat und/oder aliphatischen Diisocyanaten, vorzugsweise Hexamethylendiisocyanat, Isophorondiisocyanat und/oder 4,4'-Dicylohexylmethandiisocyanat,

b) einem linearen, hydroxylterminierten Polyol mit einem mittleren Molekulargewicht zwischen 600 und 5 000 g/Mol und mit im Mittel 1,8 bis 3,0 Zerewitinoff-aktiven Wasserstoffatomen pro Molekül,

c) einem Kettenverlängerer mit einem mittleren Molekulargewicht zwischen 60 und 500 g/Mol und mit im Mittel 1,8 bis 3,0 Zerewitinoff-aktiven Wasserstoffatomen pro Molekül und

d) gegebenenfalls üblichen Hilfs- und Zusatzstoffen,

wobei das Äquivalenzverhältnis von NCO-Gruppen zur Summe der NCO-reaktiven Gruppen 0,9:1,0 bis 1,1:1,0 beträgt.

Das pulverförmige TPU kann, bezogen auf 100 Gew.-Teile, auch aus

a) 40 bis 99,5 Gew.-Teilen eines TPU (A) hergestellt unter Verwendung von aromatischen Diisocyanaten, vorzugsweise 4,4'-Diphenylmethandiisocyanat und

b) 0,5 bis 60 Gew.-Teilen eines TPU (B) hergestellt unter Verwendung von aliphatischen Diisocyanaten, vorzugsweise aus der Gruppe bestehend aus 1,6-Hexamethylendiisocyanat, Isophorondiisocyanat und/oder 4,4'-Dicyclohexylmethandiisocyanat bestehen, erhalten werden.

Als Komponente b) werden lineare hydroxylterminierte Polyole mit einem mittleren Molekulargewicht von 600 bis 5 000 g/Mol, bevorzugt von 700 bis 4 200 g/Mol eingesetzt. Produktionsbedingt enthalten diese oft kleine Mengen an nichtlinearen Verbindungen. Häufig spricht man daher auch von "im wesentlichen linearen Polyolen".

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyesterdiole besitzen mittlere Molekulargewichte von 600 bis 5000, bevorzugt von 700 bis 4200 und können einzeln oder in Form von Mischungen untereinander zur Anwendung kommen.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im wesentlichen linearen Polyetherdiole besitzen Molekulargewichte von 600 bis 5 000, bevorzugt von 700 bis 4 200. Sie können sowohl einzeln als auch in Form von Mischungen untereinander zur Anwendung kommen.

Als Komponente c) werden Diole oder Diamine mit im Mittel 1,8 bis 3,0 zerewitinoff-aktiven Wasserstoffatomen pro Molekül und einem Molekulargewicht von 60 bis 500 g/mol eingesetzt, vorzugsweise aliphatische Diole mit 2 bis 14 Kohlenstoff-atomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoff-atomen, wie z.B. Terephthalsäure-bis-ethylenglykol oder Terephthalsäure-bis-1,4-butandiol, Hydroxyalkylenether des Hydrochinons, wie z.B. 1,4-Di(β-hydroxyethyl)-hydrochinon, ethoxylierte Bisphenole, wie z.B. 1,4-Di(β-hydroxyethyl)-bisphenol A, (cyclo)aliphatische Diamine, wie z.B. Isophorondiamin, Ethylendiamin, 1,2- Propylen-diamin, 1,3-Propylen-diamin, N-Methyl-propylen-1,3-diamin, N,N'-Dimethyl-ethylendiamin und aromatische Diamine, wie z.B. 2,4-Toluylen-diamin und 2,6-Toluylen-diamin, 3,5-Diethyl-2,4-toluylen-diamin und/oder 3,5-Diethyl -2,6-toluylen-diamin und primäre mono-, di-, tri- und/oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen, z.B. als Kettenabbrecher oder Entformungshilfen, eingesetzt werden. Beispielhaft genannt seien Alkohole wie Oktanol und Stearylalkohol oder Amine wie Butylamin und Stearylamin.

Zur Herstellung der TPUs können die Aufbaukomponenten, gegebenenfalls in Gegenwart von Katalysatoren, Hilfsmitteln und/oder Zusatzstoffen vorzugsweise in solchen Mengen zur Reaktion gebracht werden, dass das Äquivalenzverhältnis von NCO-Gruppen zur Summe der NCO-reaktiven Gruppen, insbesondere der OH-Gruppen der niedermolekularen Kettenverlängerer und Polyole 0,9:1,0 bis 1,1:1,0, vorzugsweise 0,95:1,0 bis 1,10:1,0 beträgt.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und/oder Zinnverbindungen.

Neben den TPU-Komponenten und den Katalysatoren können auch Hilfsmittel und/oder Zusatzstoffe (d) bis zu 20 Gew.%, bezogen auf die Gesamtmenge TPU, zugesetzt werden. Sie können in einer der TPU-Komponenten, vorzugsweise in der Komponente b), vorgelöst werden oder auch ggf. nach erfolgter Reaktion in einem nachgeschalteten Mischaggregat, wie z.B. einem Extruder, zudosiert werden.

Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Die erfindungsgemäß eingesetzten TPU, die einen Schmelzindex bei 190°C und einem Auflagegewicht von 21,2N (2,16 kp) von 20 bis 100, bevorzugt 30 bis 60, mit einer relativen Lösungsviskosität von 1,15 bis 1,45, bevorzugt 1,25 bis 1,35, aufweisen, können nach dem Extruder- oder Bandverfahren oder nach dem in der PCT/EP98/07753-Anmeldung beschriebenen Verfahren hergestellt werden.

Die in der EP-A 399272 beschriebenen TPU mit einer relativ hohen Schmelzeviskosität und den damit verbundenen niedrigen MVR-Werten weisen einen hohen Gehalt an freien Isocyanatgruppen auf. Erwähnt werden 0,05 bis 0,1 Gew.-%, vorzugsweise 0,1 bis 0,5 %. Es wurde nun gefunden, dass dieser hohe Restgehalt an NCO-Gruppen zur Folge hat, dass die freien NCO-Gruppen reagieren und dadurch die Schmelzeviskosität erhöhen. Die TPU verändern sich im Laufe der Lagerung. Dies macht eine gezielte Herstellung enger MVR-Bereiche schwierig.

Hingegen können die erfindungsgemäßen TPU auf Grund der deutlich niedrigeren Schmelzeviskosität und den damit verbundenen größeren MVR-Werten mit einem deutlich niedrigeren Rest-NCO-Gehalt von 0,0 bis 0,05 Gew% (bez. auf das Gesamtgewicht) hergestellt werden. Da sich die Schmelzeviskosität mit der Lagerung nicht wesentlich verändert, ist eine gezielte Herstellung enger MVR-Bereiche unproblematisch.

Ein weiterer Gegenstand der Erfindung ist ein Verfahren zur Herstellung der erfindungsgemäßen weichen, elastischen TPU-Folien, welches dadurch gekennzeichnet ist, dass ein pulverförmiges TPU oder TPU-Gemisch mit einem Schmelzindex bei 190°C und einem Auflagegewicht von 21,2N (2,16 kp) von 20 bis 100, bevorzugt 30 bis 60, mit einer relativen Lösungsviskosität von 1,15 bis 1,45, bevorzugt 1,25 bis 1,35 sowie einer Härte von 80 bis 98 Shore A, wobei das pulverförmige TPU erhältlich ist durch Reaktion von

> a) aromatischen und/oder aliphatischen Diisocyanaten
> b) einem linearen, hydroxylterminierten Polyol mit einem mittleren Molekulargewicht zwischen 600 und 5 000 g/Mol und mit im Mittel 1,8 bis 3,0 Zerewitinoff-aktiven Wasserstoffatomen pro Molekül,
> c) einem Kettenverlängerer mit einem mittleren Molekulargewicht zwischen 60 und 500 g/Mol und mit im Mittel 1,8 bis 3,0 Zerewitinoff-aktiven Wasserstoffatomen pro Molekül,

wobei das Äquivalenzverhältnis von NCO-Gruppen zur Summe der NCO-reaktiven Gruppen 0,9:1,0 bis 1,1:1,0 beträgt, mittels eines temperierten Formwerkzeuges bei einer Formwerkzeugtemperatur von 180°C bis 215°C gesintert wird.

Vorzugsweise erfolgt die Sinterung bei einer Formwerkzeugtemperatur von 190°C bis 210°C.

Das eingesetzte TPU hat bevorzugt eine durchschnittliche Korngröße von 50 bis 800 μm, besonders bevorzugt von 50 bis 500 μm.

Als pulverförmiges TPU oder TPU-Gemisch werden vorzugsweise die oben beschriebenen TPU bzw. TPU-Gemische im erfindungsgemäßen Verfahren eingesetzt.

Die erfindungsgemäßen Formmassen eignen sich zur Herstellung verschiedenster Formkörper, beispielsweise von Folien, insbesondere genarbten Sinterfolien. Pulverförmig kann die erfindungsgemäße Polyurethanformmasse nach dem bekannten "Powder-Slush-Verfahren" in beheizbaren Werkzeugen zu Häuten gesintert werden. Das dafür benötigte Pulver wird aus dem Granulat der erfindungsgemäßen Polyurethanformmasse durch Kaltmahlen gewonnen. Das Mahlgut wird in das an einer Seite offene, beheizbare Werkzeug eingebracht und auf der Innenwandung der beheizten Oberfläche innerhalb kurzer Zeit gesintert. Nach dem Abkühlen des Werkzeuges kann die Slush-Haut entnommen werden. Das Verfahren ist also analog demjenigen zur Herstellung von Armaturentafel-Bespannungen aus PVC-Häuten. Beschrieben ist es beispielsweise in DE-A 39 32 923 als "Powder-Slush-Verfahren".

Die erfindungsgemäßen TPU-Folien können unter anderem als Oberflächenverkleidung in Verkehrsmitteln verwendet werden.

Die erfindungsgemäßen TPU-Folien eignen sich auch zum Auftragen auf Substrate mittels Coextrusion oder Kalandrieren. Aufgrund der möglichen niedrigen Verarbeitungstemperaturen (180° bis 215°C) können damit auch Substrate beschichtet werden, die aufgrund ihres Erweichungspunktes, mit den in der EP-A 399 272 beschriebenen TPU nicht beschichtet werden können.

In Tabelle 1 sind eine Reihe von TPU, bei beiden veschiedenen Gewichten gemessen, aufgeführt. An diesen Beispielen erkennt man den deutlichen Unterschied zwischen den erfindungsgemäßen PU-Folien und den Folien aus der EP-A 399 272.

In Tabelle 2 ist der Einfluss der Verarbeitungstemperaturen auf den Molekulargewichtsabbau deutlich ersichtlich. Die relative Lösungsviskosität ist dem mittleren Molekulargewicht proportional (siehe unter anderem Dissertation von Wolfgang Endres aus dem Fachbereich Chemie der Universität Osnabrück aus dem Jahre 1994).

Die Erfindung soll anhand der nachfolgenden Beispiele näher erläutert werden.

**Beispiele**

Tabelle 1

| Schmelzindex (MVR) bei 190°C | | |
|---|---|---|
| Beispiele | Auflagegewicht | |
| | 21,2N | 212N |
| Bsp.1 | 56 | >500 (läuft durch) |
| Bsp.2 | 40 | >500 (läuft durch) |
| Bsp.3 | 41 | >500 (läuft durch) |
| Bsp.4 | 90 | >500 (läuft durch) |
| Bsp.5 | 98 | >500 (läuft durch) |
| Bsp.6 | 30 | >500 (läuft durch) |
| Vergleich 1 | 3 | 82 |
| Vergleich 2 | 14 | 375 |
| Vergleich 3 | 5 | 90 |

Tabelle 2

| Einfluss der Verarbeitungstemperatur auf den Molekulargewichtsabbau | | | | | |
|---|---|---|---|---|---|
| Beispiele/-Vergleich | LV (Pulver) | MVR(190°C mit 21,2/212N) | LV ((Folie nach Sintern bei X°C) | Folien-Sintertemperatur | Prozentualer LV-Abbau |
| 3 | 1,273 | 41/>500 | 1,260 (210°C) | 210°C | 5% |
| 4 | 1,263 | 90/>500 | 1,258 (190°C) | 190°C | 2% |
| 5 | 1,303 | 98/>500 | 1,294 (185°C) | 185°C | 3% |
| 6 | 1,339 | 30//>500 | 1,312 (215°C) | 215°C | 8% |
| Vergleich 1 | 1,558 | 3,2/82 | 1,401/ (270°C) | 270°C | 39% |
| Vergleich 3 | 1,48 | 5/90 | 1,336 (270°C) | 270°C | 43% |

Im Beispiel 1 wurde am Pulver eine LV von 1,245 gemessen und im Beispiel 2 am Pulver eine LV von 1,311.

Auch die MVR-Werte wurden am Pulver gemessen. Prozentualer LV-Abbau= (LV(Pulver)-1)/(LV(Folie nach Sintern)-1)*100.

**Herstellung der TPU und TPU-Folien**

Die TPU auf Basis HDI wurden folgendermaßen kontinuierlich hergestellt:

Das Gemisch aus Polyol, Kettenverlängerer und Dibutylzinndilaurat wurde in einem Kessel unter Rühren auf ca. 110°C erhitzt und zusammen mit HDI, welches mittels Wärmeaustauscher auf ca. 110°C erhitzt wurde, durch einen Statikmischer der Firma Sulzer (DN6 mit 10 Mischelementen und einer Scherrate von 500 s$^{-1}$) intensiv gemischt und dann in den Einzug einer Schnecke (ZSK 32) geführt.

Das gesamte Gemisch reagierte auf dem Extruder bis zur vollständigen Umsetzung aus und wurde anschließend granuliert.

Die TPU auf Basis MDI wurden folgendermaßen kontinuierlich hergestellt:

Das Gemisch aus Polyol, Kettenverlängerer und Zinndioctoat wurde in einem Kessel unter Rühren auf ca. 130°C erhitzt und ebenso wie das MDI (ca. 120°C) im One-Shot-Verfahren in den Einzug einer Schnecke (ZSK 32) geführt.

Das gesamte Gemisch reagierte auf dem Extruder bis zur vollständigen Umsetzung aus und wurde anschließend granuliert.

Die Additive waren entweder im Polyol gelöst oder wurden kontinuierlich in die Schnecke dosiert.

Das jeweilige Granulat wurde unter Kühlung mit flüssigem Stickstoff zu feinem Pulver mit einer Kornverteilung <500 μm gemahlen. Das TPU-Pulver wurde in an sich bekannter Weise auf ein temperiertes Formwerkzeug (jeweilige Temperatur siehe einzelne Bespiele) aufgebracht, nach 30-60 Sekunden das überschüssige TPU-Pulver abgeschüttet und danach das auf dem Formwerkzeug verbliebene TPU in 2 Minuten gesintert. Nach dem Abkühlen des Formwerkzeugs wurde die TPU-Folie entnommen. In allen Beispielen und Vergleichsbeispielen war die erhaltene Folie weich und elastisch und wies keinerlei Fehlstellen oder Lunker auf.

**Zusammensetzung der TPU (thermoplastische Polyurethane):**

**Beispiele 2, 4 und Vergleich 1 und 2:**

1,0 mol De2020
0,43 mol PE225B
3,76 mol 1,4 BDO
40 ppm DBTL

| Bsp.2 | Bsp.4 | Vergleich1 | Vergleich2 |
|---|---|---|---|
| 5,06 mol HDI | 4,98mol HDI | 5,19mol HDI | 5,14mol HDI |

**Beispiel 5:**

1,0 mol PE225B
0,43 mol Acclaim2220
3,43 mol 1,6 HDO
4,67 mol HDI
1,0 Gew.-% Stabaxol P200 (bez. auf PE225B)
60 ppm DBTL

**Beispiel 6:**

1,0 mol Capa225
2,36 mol 1,6 HDO
3,29 mol HDI
60 ppm DBTL

**Beispiele 1 und 3 und Vergleich 3:**

1,0 mol PE80B
0,82 mol 1,4 BDO
200 ppm Zinndioctoat

| Bsp.1 | Bsp.3 | Vergleich 3 |
|---|---|---|
| 1,765 mol MDI | 1,775mol MDI | 1,82mol MDI |

Alle TPU enthielten 0,2 Gew.-% Ethylen-bis-stearylamid, 0,5 Gew.-% Irganox®1010, 0,4 Gew.-% Tinuvin®328 und 0,4 Gew.-% Tinuvin®622, jeweils bezogen auf TPU. Der Gehalt an Katalysator (DBTL und Zinndioctoat) bezieht sich auf Gesamt-Polyol.

| | |
|---|---|
| DBTL | Dibutylzinndilaurat |
| DE2020 | Polycarbonatdiol auf 1,6-Hexandiol-Basis mit mittlerem Molekulargewicht $\overline{M}_n$ ca. 2000 g/mol |
| PE 225B | Polybutandioladipat mit mittlerem Molekulargewicht $\overline{M}_n$ ca. 2250 g/mol |
| 1,4BDO | 1,4-Butandiol |
| PE 80B | Polybutandioladipat mit $\overline{M}_n$ ca. 800 g/mol |
| Capa® 225 | Polycaprolactondiol mit $\overline{M}_n$ ca. 2000 g/mol (Fa. Solvay Interox) |
| HDI | Hexamethylendiisocyanat |
| MDI | 4,4'-Diphenylmethandiisocyanat |
| Irganox® 1010 | Tetrakis[methylen-(3,5-di-tert-butyl-4-hydroxyhydrocinnamate)]methan (Fa. Ciba Geigy) |
| Tinuvin® 328 | 2-(2'-Hydroxy-3'-5'-di-tert-amylphenyl)benzotriazol (Fa. Ciba Geigy) |
| Tinuvin® 622 | Dimethylsuccinatpolymer mit 4-Hxdroxy-2,2,6,6-tetramethyl-1-piperidin ethanol (Fa. Ciba Geigy) |
| 1,6 HDO | 1,6-Hexandiol |
| Acclaim® 2220 | Polyetherpolyol mit Polyoxypropylen-Polyoxyethleneinheiten (mit ca. 85% primären Hydroxylgruppen und einem mittleren Molekulargewicht von $M_n$ ca. 2000g/mol Fa. Lyondell) |
| Stabaxol® P200 | Aromatisches Polycarbodiimid (Fa. Rhein-Chemie) |

An den in den Beispielen erhaltenen Materialien wurden folgende Messungen durchgeführt:

1) Messungen der Lösungsviskosität (LV)

Dazu wurden 99,7 g N-Methyl-2-Pyrrolidon mit 0,1% Dibutylamin und 0,4 g TPU-Pulver eingewogen. Die Proben wurden auf einem Magnetrührer gerührt.

MDI-Proben wurden bei Raumtemperatur gelöst und über Nacht stehengelassen.

HDI-Proben wurden bei ca. 70°C ca. 1 Stunde gelöst und über Nacht auf Raumtemperatur abgekühlt.

Die Proben und ein Blindwert (reines Lösungsmittel) wurden bei 25°C an einem Viskositätsmessplatz der Fa. Schott gemessen.

Die relative Lösungsviskosität berechnet sich aus der Zeit (Lösung) dividiert durch die Zeit (Lösungsmittel).

Der Viskositätsmessplatz der Fa. Schott besteht aus:

Viskositätsmessplatz AVS 400, Messstativ ASV/S, Glasthermostat, Ubbelohde-Viskosimeter Typ 50110

Die MVR-Messungen wurden bei 190° und 21,2N bzw. 212N mit 5 min Vorheizzeit gemäß ISO 1133 durchgeführt.

**Patentansprüche**

1.  Weiche, elastische Polyurethan-Folien erhältlich durch Sintern eines pulverförmigen thermoplastischen Polyurethans (TPU) oder eines TPU-Gemisches mit einem Schmelzindex bei 190°C und einem Auflagegewicht von 21,2N (2,16 kp) von 20 bis 100 mit einer relativen Lösungsviskosität von 1,15 bis 1,45 sowie einer Shore-A-Härte von 80 bis 98 mit Hilfe eines temperierten Formwerkzeuges, wobei das pulverförmige TPU erhältlich ist durch Reaktion von

    a) aromatischen und/oder aliphatischen Diisocyanaten
    b) einem linearen, hydroxylterminierten Polyol mit einem mittleren Molekulargewicht zwischen 600 und 5 000 g/Mol und mit im Mittel 1,8 bis 3,0 Zerewitinoff-aktiven Wasserstoffatomen pro Molekül,
    c) einem Kettenverlängerer mit einem mittleren Molekulargewicht zwischen 60 und 500 g/Mol und mit im Mittel 1,8 bis 3,0 Zerewitinoff-aktiven Wasserstoffatomen pro Molekül,

    wobei das Äquivalenzverhältnis von NCO-Gruppen zur Summe der NCO-reaktiven Gruppen 0,9:1,0 bis 1,1:1,0 beträgt.

2.  Weiche, elastische Polyurethan-Folien gemäß Anspruch 1, wobei das pulverförmige TPU erhältlich ist durch Reaktion von

a) aromatischem Diisocyanat,

b) einem linearen, hydroxylterminierten Polyol mit einem mittleren Molekulargewicht zwischen 600 und 5 000 g/Mol und mit im Mittel 1,8 bis 3,0 Zerewitinoff-aktiven Wasserstoffatomen pro Molekül,

c) einem Kettenverlängerer mit einem mittleren Molekulargewicht zwischen 60 und 500 g/Mol und mit im Mittel 1,8 bis 3,0 Zerewitinoff-aktiven Wasserstoffatomen pro Molekül,

wobei das Äquivalenzverhältnis von NCO-Gruppen zur Summe der NCO-reaktiven Gruppen 0,9:1,0 bis 1,1:1,0 beträgt.

**3.** Weiche, elastische Polyurethan-Folien gemäß Anspruch 1, wobei das pulverförmige TPU erhältlich ist durch Reaktion von

a) Hexamethylendiisocyanat

b) einem linearen, hydroxylterminierten Polyol mit einem mittleren Molekulargewicht zwischen 600 und 5 000 g/Mol und mit im Mittel 1,8 bis 3,0 Zerewitinoff-aktiven Wasserstoffatomen pro Molekül,

c) einem Kettenverlängerer mit einem mittleren Molekulargewicht zwischen 60 und 500 g/Mol und mit im Mittel 1,8 bis 3,0 Zerewitinoff-aktiven Wasserstoffatomen pro Molekül,

wobei das Äquivalenzverhältnis von NCO-Gruppen zur Summe der NCO-reaktiven Gruppen 0,9:1,0 bis 1,1:1,0 beträgt.

**4.** Weiche, elastische Polyurethan-Folien gemäß Anspruch 1, wobei das pulverförmige TPU erhältlich ist durch Reaktion von

a) 95 bis 70 Mol-% Hexamethylendiisocyanat und 5 bis 30 Mol-% andere aliphatische Diisocyanate,

b) einem linearen, hydroxylterminierten Polyol mit einem mittleren Molekulargewicht zwischen 600 und 5 000 g/mol und mit im Mittel 1,8 bis 3,0 Zerewitinoff-aktiven Wasserstoffatomen pro Molekül,

c) einem Kettenverlängerer mit einem mittleren Molekulargewicht zwischen 60 und 500 g/mol und mit im Mittel 1,8 bis 3,0 Zerewitinoff-aktiven Wasserstoffatomen pro Molekül,

wobei das Äquivalenzverhältnis von NCO-Gruppen zur Summe der NCO-reaktiven Gruppen 0,9:1,0 bis 1,1:1,0 beträgt.

**5.** Weiche, elastische Polyurethan-Folien gemäß Anspruch 1, wobei das pulverförmige TPU erhältlich ist durch Reaktion von

a) 100 bis 60 Mol-%, bevorzugt 100 bis 70 Mol-% Hexamethylendiisocyanat (HDI) und 0 bis 40 Mol-% andere aliphatische Diisocyanate,

b) einem linearen, hydroxylterminierten Polyol mit einem mittleren Molekulargewicht zwischen 600 und 5 000 g/mol und mit im Mittel 1,8 bis 3,0 Zerewitinoff-aktiven Wasserstoffatomen pro Molekül,

c) 80 bis 100 Gew.-% 1,6-Hexandiol und 0 bis 20 Gew.-% Kettenverlängerer mit einem mittleren Molekulargewicht von 60 bis 500 g/Mol, und mit im Mittel 1,8 bis 3,0 Zerewitinoff-aktiven Wasserstoffatomen pro Molekül,

wobei das Äquivalenzverhältnis von NCO-Gruppen zur Summe der NCOreaktiven Gruppen 0,9:1,0 bis 1,1:1,0 beträgt.

**6.** Weiche, elastische Polyurethan-Folien gemäß Anspruch 1, wobei das pulverförmige TPU, bezogen auf 100 Gew. -Teile erhältlich ist aus

a) 40 bis 99,5 Gew.-Teilen eines TPU (A) hergestellt unter Verwendung von aromatischen Diisocyanaten und

b) 0,5 bis 60 Gew.-Teilen eines TPU (B) hergestellt unter Verwendung von aliphatischen Diisocyanaten.

**7.** Verfahren zur Herstellung von weichen, elastischen TPU-Folien gemäß den Ansprüchen 1 bis 6, **dadurch gekennzeichnet, dass** ein pulverförmiges TPU oder TPU-Gemisch mit einem Schmelzindex bei 190°C und einem Auflagegewicht von 21,2N (2,16 kp) von 20 bis 100, mit einer relativen Lösungsviskosität von 1,15 bis 1,45 sowie einer Härte von 80 bis 98 Shore A, wobei das pulverförmige TPU erhältlich ist duch Reaktion von

a) aromatischen und/oder aliphatischen Diisocyanaten

b) einem linearen, hydroxylterminierten Polyol mit einem mittleren Molekulargewicht zwischen 600 und 5 000 g/Mol und mit im Mittel 1,8 bis 3,0 Zerewitinoff-aktiven Wasserstoffatomen pro Molekül,
c) einem Kettenverlängerer mit einem mittleren Molekulargewicht zwischen 60 und 500 g/Mol und mit im Mittel 1,8 bis 3,0 Zerewitinoff-aktiven Wasserstoffatomen pro Molekül,

wobei das Äquivalenzverhältnis von NCO-Gruppen zur Summe der NCO-reaktiven Gruppen 0,9:1,0 bis 1,1:1,0 beträgt, mittels eines temperierten Formwerkzeuges bei einer Formwerkzeugtemperatur von 180°C bis 215°C gesintert wird.

**8.** Verfahren nach Anspruch 7, **dadurch gekennzeichnet, dass** die Sinterung bei einer Formwerkzeugtemperatur von 190 bis 210°C durchgeführt wird.

**9.** Verfahren nach Anspruch 7 oder 8, **dadurch gekennzeichnet, dass** das TPU als Pulver mit einer durchschnittlichen Korngröße von 50 bis 800 µm eingesetzt wird.

**10.** Verfahren nach einem oder mehreren der Ansprüche 7 bis 9, **dadurch gekennzeichnet, dass** ein TPU verwendet wird, welches erhältlich ist durch Reaktion von

a) Hexamethylendiisocyanat
b) einem linearen, hydroxylterminierten Polyol mit einem mittleren Molekulargewicht zwischen 600 und 5 000 g/Mol und mit im Mittel 1,8 bis 3,0 Zerewitinoff-aktiven Wasserstoffatomen pro Molekül,
c) einem Kettenverlängerer mit einem mittleren Molekulargewicht zwischen 60 und 500 g/Mol und mit im Mittel 1,8 bis 3,0 Zerewitinoff-aktiven Wasserstoffatomen pro Molekül,

wobei das Äquivalenzverhältnis von NCO-Gruppen zur Summe der NCO-reaktiven Gruppen 0,9:1,0 bis 1,1:1,0 beträgt.

**11.** Verfahren nach einem oder mehreren der Ansprüche 7 bis 9 **dadurch gekennzeichnet, dass** das eingesetzte TPU, bezogen auf 100 Gew.-Teile aus

a) 40 bis 99,5 Gew.-Teilen eines TPU (A) hergestellt unter Verwendung von aromatischen Diisocyanaten und
b) 0,5 bis 60 Gew.-Teilen eines TPU (B) hergestellt unter Verwendung von aliphatischen Diisocyanaten.

**12.** Verwendung der Polyurethanfolien gemäß Anspruch 1 bis 6 oder der gemäß den Ansprüchen 7 bis 11 hergestellten Polyurethanfolien als Oberflächenverkleidung in Verkehrsmitteln.


**Claims**

**1.** Soft, elastic polyurethane films obtainable by sintering a pulverulent thermoplastic polyurethane (TPU) or a TPU mixture having a melt index of from 20 to 100 at 190°C and at an applied weight of 21.2 N (2.16 kp), and a relative solution viscosity of from 1.15 to 1.45 as well as a Shore hardness of from 80 to 98, with the aid of a tempered mould, the pulverulent TPU being obtainable by the reaction of

a) aromatic and/or aliphatic diisocyanates,
b) a linear, hydroxyl-terminated polyol having an average molecular weight of between 600 and 5000 g/mol and on average 1.8 to 3.0 Zerewitinoff-active hydrogen atoms per molecule,
c) a chain extender having an average molecular weight of between 60 and 500 g/mol and on average 1.8 to 3.0 Zerewitinoff-active hydrogen atoms per molecule,

wherein the equivalent ratio of NCO groups to the sum of the groups which are reactive with NCO is 0.9:1.0 to 1.1:1.0.

**2.** Soft, elastic polyurethane films according to claim 1, wherein the pulverulent TPU is obtainable by the reaction of

a) aromatic diisocyanate,
b) a linear, hydroxyl-terminated polyol having an average molecular weight of between 600 and 5000 g/mol and on average 1.8 to 3.0 Zerewitinoff-active hydrogen atoms per molecule,

c) a chain extender having an average molecular weight of between 60 and 500 g/mol and on average 1.8 to 3.0 Zerewitinoff-active hydrogen atoms per molecule.

wherein the equivalent ratio of NCO groups to the sum of the groups which are reactive with NCO is 0.9:1.0 to 1.1:1.0.

3.  Soft, elastic polyurethane films according to claim 1, wherein the pulverulent TPU is obtainable by the reaction of

  a) hexamethylene diisocyanate,
  b) a linear, hydroxyl-terminated polyol having an average molecular weight of between 600 and 5000 g/mol and on average 1.8 to 3.0 Zerewitinoff-active hydrogen atoms per molecule,
  c) a chain extender having an average molecular weight of between 60 and 500 g/mol and on average 1.8 to 3.0 Zerewitinoff-active hydrogen atoms per molecule,

wherein the equivalent ratio of NCO groups to the sum of the groups which are reactive with NCO is 0.9:1.0 to 1.1:1.0.

4.  Soft, elastic polyurethane films according to claim 1, wherein the pulverulent TPU is obtainable by the reaction of

  a) 95 to 70 mol.% hexamethylene diisocyanate and 5 to 30 mol.% of other aliphatic diisocyanates,
  b) a linear, hydroxyl-terminated polyol having an average molecular weight of between 600 and 5000 g/mol and on average 1.8 to 3.0 Zerewitinoff-active hydrogen atoms per molecule,
  c) a chain extender having an average molecular weight of between 60 and 500 g/mol and on average 1.8 to 3.0 Zerewitinoff-active hydrogen atoms per molecule,

wherein the equivalent ratio of NCO groups to the sum of the groups which are reactive with NCO is 0.9:1.0 to 1.1:1.0.

5.  Soft, elastic polyurethane films according to claim 1, wherein the pulverulent TPU is obtainable by the reaction of

  a) 100 to 60 mol.%, preferably 100 to 70 mol.%, hexamethylene diisocyanate (HDI) and 0 to 40 mol.% of other aliphatic diisocyanates,
  b) a linear, hydroxyl-terminated polyol having an average molecular weight of between 600 and 5000 g/mol and on average 1.8 to 3.0 Zerewitinoff-active hydrogen atoms per molecule,
  c) 80 to 100 wt.% 1,6-hexanediol and 0 to 20 wt.% of a chain extender having an average molecular weight of from 60 to 500 g/mol and on average 1.8 to 3.0 Zerewitinoff-active hydrogen atoms per molecule,

wherein the equivalent ratio of NCO groups to the sum of the groups which are reactive with NCO is 0.9:1.0 to 1.1:1.0.

6.  Soft, elastic polyurethane films according to claim 1, wherein the pulverulent TPU, based on 100 parts by weight, is obtainable from

  a) 40 to 99.5 parts by weight of a TPU (A) prepared using aromatic diisocyanates and
  b) 0.5 to 60 parts by weight of a TPU (B) prepared using aliphatic diisocyanates.

7.  Process for producing soft, elastic TPU films according to claims 1 to 6,
**characterised in that** a pulverulent TPU or TPU mixture having a melt index of from 20 to 100 at 190°C and at an applied weight of 21.2 N (2.16 kp), and a relative solution viscosity of from 1.15 to 1.45 as well as a hardness of from 80 to 98 Shore A, the pulverulent TPU being obtainable by the reaction of

  a) aromatic and/or aliphatic diisocyanates,
  b) a linear, hydroxyl-terminated polyol having an average molecular weight of between 600 and 5000 g/mol and on average 1.8 to 3.0 Zerewitinoff-active hydrogen atoms per molecule,
  c) a chain extender having an average molecular weight of between 60 and 500 g/mol and on average 1.8 to 3.0 Zerewitinoff-active hydrogen atoms per molecule,

wherein the equivalent ratio of NCO groups to the sum of the groups which are reactive with NCO is 0.9:1.0 to 1.1:1.0,
is sintered by means of a tempered mould at a mould temperature of 180°C to 215°C.

8. Process according to claim 7, **characterised in that** the sintering is carried out at a mould temperature of 190°C to 210°C.

9. Process according to claim 7 or 8, **characterised in that** the TPU is used as powder having an average particle size of from 50 to 800 μm.

10. Process according to one or more of claims 7 to 9, **characterised in that** a TPU is used which is obtainable by the reaction of

    a) hexamethylene diisocyanate,
    b) a linear, hydroxyl-terminated polyol having an average molecular weight of between 600 and 5000 g/mol and on average 1.8 to 3.0 Zerewitinoff-active hydrogen atoms per molecule,
    c) a chain extender having an average molecular weight of between 60 and 500 g/mol and on average 1.8 to 3.0 Zerewitinoff-active hydrogen atoms per molecule,

wherein the equivalent ratio of NCO groups to the sum of the groups which are reactive with NCO is 0.9:1.0 to 1.1:1.0.

11. Process according to one or more of claims 7 to 9, **characterised in that** the TPU used, based on 100 parts by weight, consists of

    a) 40 to 99.5 parts by weight of a TPU (A) prepared using aromatic diisocyanates and
    b) 0.5 to 60 parts by weight of a TPU (B) prepared using aliphatic diisocyanates.

12. Use of the polyurethane films according to claims 1 to 6 or of the polyurethane films produced according to claims 7 to 11 as surface covering in vehicles used for transport.

**Revendications**

1. Feuilles souples et élastiques de polyuréthane que l'on peut obtenir par frittage d'un polyuréthane thermoplastique pulvérulent (TPU) ou d'un mélange de TPU avec un indice de fusion à 190°C et un poids de charge de 21,2 N (2,16 kp) de 20 à 100 avec une viscosité relative en solution de 1,15 à 1,45, ainsi qu'une dureté shore A de 80 à 98 à l'aide d'un outil de formage mis à température, le TPU pulvérulent pouvant être obtenu par réaction :

    a) de diisocyanates aromatiques et/ou aliphatiques ;
    b) d'un polyol linéaire à terminaison hydroxyle d'un poids moléculaire moyen entre 600 et 5 000 g/mole et avec, en moyenne, 1,8 à 3,0 atomes d'hydrogène actifs selon Zérévitinov par molécule, et
    c) d'un allongeur de chaîne d'un poids moléculaire moyen entre 60 et 500 g/mole et avec, en moyenne, 1,8 à 3,0 atomes d'hydrogène actifs selon Zérévitinov par molécule,
    le rapport d'équivalence des groupements NCO à la somme des groupements réagissant au NCO étant de 0,9:1,0 à 1,1:1,0.

2. Feuilles souples et élastiques de polyuréthane selon la revendication 1, le TPU pulvérulent pouvant être obtenu par réaction :

    a) d'un diisocyanate aromatique ;
    b) d'un polyol linéaire à terminaison hydroxyle d'un poids moléculaire moyen entre 600 et 5 000 g/mole et avec, en moyenne, 1,8 à 3,0 atomes d'hydrogène actifs selon Zérévitinov par molécule ;
    c) d'un allongeur de chaîne d'un poids moléculaire moyen entre 60 et 500 g/mole et avec, en moyenne, 1,8 à 3,0 atomes d'hydrogène actifs selon Zérévitinov par molécule, le rapport d'équivalence de groupements NCO à la somme des groupements réagissant au NCO étant de 0,9:1,0 à 1,1:1,0.

3. Feuilles souples et élastiques de polyuréthane selon la revendication 1, le TPU pulvérulent pouvant être obtenu par réaction :

a) d'un diisocyanate d'hexaméthylène;
b) d'un polyol linéaire à terminaison hydroxyle d'un poids moléculaire moyen entre 600 et 5 000 g/mole et avec, en moyenne, 1,8 à 3,0 atomes d'hydrogène actifs selon Zérévitinov par molécule;
c) d'un allongeur de chaîne d'un poids moléculaire moyen entre 60 et 500 g/mole et avec, en moyenne, 1,8 à 3,0 atome d'hydrogène actifs selon Zérévitinov par molécule,

le rapport d'équivalence de groupements NCO à la somme des groupements réagissant au NCO étant de 0,9:1,0 à 1,1:1,0.

4. Feuilles souples et élastiques de polyuréthane selon la revendication 1, le TPU pulvérulent pouvant être obtenu par réaction :

a) de 95 à 70% en mole de diisocyanate d'hexaméthylène et de 5 à 30% en mole d'autres diisocyanates aliphatiques;
b) d'un polyol linéaire à terminaison hydroxyle d'un poids moléculaire moyen entre 600 et 5 000 g/mole et avec, en moyenne, 1,8 à 3,0 atomes d'hydrogène actifs selon Zérévitinov par molécule;
c) d'un allongeur de chaîne d'un poids moléculaire moyen entre 60 et 500 g/mole et avec, en moyenne, 1,8 à 3,0 atomes d'hydrogène actifs selon Zérévitinov par molécule,
le rapport d'équivalence de groupements NCO à la somme des groupements réagissant au NCO étant de 0,9: 1,0 à 1,1:1,0.

5. Feuilles souples et élastiques de polyuréthane selon la revendication 1, le TPU pulvérulent pouvant être obtenu par réaction :

a) de 100 à 60% en mole, de préférence 100 à 70% en mole de diisocyanate d'hexaméthylène (HDI) et de 0 à 40% en mole d'autres diisocyanates aliphatiques;
b) d'un polyol linéaire à terminaison hydroxyle d'un poids moléculaire moyen entre 600 et 5 000 g/mole et avec, en moyenne, 1,8 à 3,0 atomes d'hydrogène actifs selon Zérévitinov par molécule;
c) de 80 à 100% en poids de 1,6-hexanediol et de 0 à 20% en poids d'un allongeur de chaîne d'un poids moléculaire moyen entre 60 et 500 g/mole et avec, en moyenne, 1,8 à 3,0 atome d'hydrogène actifs selon Zérévitinov par molécule,

le rapport d'équivalence de groupements NCO à la somme des groupements réagissant au NCO étant de 0,9:1,0 à 1,1:1,0.

6. Feuilles souples et élastiques de polyuréthane selon la revendication 1, le TPU pulvérulent, sur base de 100 parties en poids, pouvant être obtenu à partir de :

a) 40 à 99,5 parties en poids d'un TPU (A) préparé en utilisant des diisocyanates aromatiques, et
b) 0,5 à 60 parties en poids d'un TPU (B) préparé en utilisant des diisocyanates aliphatiques.

7. Procédé de préparation de feuilles souples et élastiques de polyuréthane selon les revendications 1 à 6, **caractérisé en ce qu'**on fritte au moyen d'un outil de formage mis à température à une température d'outil de formage de 180°C à 215°C, un TPU ou un mélange de TPU pulvérulent avec un indice de fusion à 190°C et un poids de charge de 21,2 N (2,16 kp) de 20 à 100, avec une viscosité relative en solution de 1,15 à 1,45, ainsi qu'une dureté de 80 à 98 shore A, le TPU pulvérulent pouvant être obtenu par réaction :

a) de diisocyanates aromatiques et/ou aliphatiques;
b) d'un polyol linéaire à terminaison hydroxyle d'un poids moléculaire moyen entre 600 et 5 000 g/mole et avec, en moyenne, 1,8 à 3,0 atomes d'hydrogène actifs selon Zérévitinov par molécule, et
c) d'un allongeur de chaîne avec un poids moléculaire moyen entre 60 et 500 g/mole et avec, en moyenne, 1,8 à 3,0 atomes d'hydrogène actifs selon Zérévitinov par molécule,
le rapport d'équivalence de groupements NCO à la somme des groupements réagissant au NCO étant de 0,9: 1,0 à 1,1:1,0.

8. Procédé selon la revendication 7, **caractérisé en ce que** le frittage s'effectue à une température d'outil de formage de 190 à 210°C.

9. Procédé selon la revendication 7 ou 8, **caractérisé en ce que** le TPU est utilisé sous forme de poudre avec une grosseur moyenne de particules de 50 à 800 µm.

10. Procédé selon une ou plusieurs des revendications 7 à 9, **caractérisé en ce qu'**on utilise un TPU, lequel peut être obtenu par réaction :

   a) de diisocyanate d'hexaméthylène;
   b) d'un polyol linéaire à terminaison hydroxyle d'un poids moléculaire moyen entre 600 et 5 000 g/mole et avec, en moyenne, 1,8 à 3,0 atomes d'hydrogène actifs selon Zérévitinov par molécule, et
   c) d'un allongeur de chaîne avec un poids moléculaire moyen entre 60 et 500 g/mole et avec, en moyenne, 1,8 à 3,0 atomes d'hydrogène actifs selon Zérévitinov par molécule,

   le rapport d'équivalence de groupements NCO à la somme des groupements réagissant au NCO étant de 0,9:1,0 à 1,1:1,0.

11. Procédé selon une ou plusieurs des revendications 7 à 9, **caractérisé en ce que** le TPU utilisé, sur base de 100 parties en poids, est constitué de :

   a) 40 à 99,5 parties en poids d'un TPU (A) fabriqué en utilisant des diisocyanates aromatiques, et
   b) 0,5 à 60 parties en poids d'un TPU (B) fabriqué en utilisant des diisocyanates aliphatiques.

12. Utilisation des feuilles de polyuréthane selon la revendication 1 à 6 ou des feuilles de polyuréthane fabriquées selon les revendications 7 à 11, comme revêtement de surface dans les moyens de transport: